# EUROPEAN PATENT APPLICATION

(11) **EP 3 506 210 A1**
(43) Date of publication of application: **03.07.2019**
(21) Application number: 17210627.0
(22) Date of filing: 27.12.2017
(51) Int. Cl.: G06T 15/20, G06T 19/00

(54) **HANDLING IMAGE CONTENT IN A VIRTUAL REALITY ENVIRONMENT**

(71) Applicant: Nokia Technologies Oy, 02610 Espoo (FI)
(72) Inventor: OIKKONEN, Markku, 00640 Helsinki (FI)
(74) Representative: Kolster Oy Ab

(57) **Abstract**

The application relates to editing and viewing Virtual Reality content, such as editing and viewing Virtual Reality video within a three-dimensional Virtual Reality environment. According to a first aspect, this specification describes a method comprising: providing one or more virtual views within a three-dimensional virtual reality environment, said one or more virtual views representative of a virtual reality scene, and said one or more virtual views having a first projection type; selecting, within the three-dimensional virtual environment, one of said virtual views; causing the selected virtual view to change from the first projection type to a second projection type in response to a first trigger; and enabling manipulation of the selected virtual view in the second projection type.

## Description

### Field

The application relates to editing and viewing Virtual Reality content, such as editing and viewing Virtual Reality video within a three-dimensional Virtual Reality environment.

### Background

The technology, methods and tools for editing Virtual Reality (VR) video have not developed as fast as the tools for capturing virtual reality video. Editing of virtual reality content currently takes place in a two-dimensional environment, where the three-dimensional images are shown on planar screens, and is performed in a similar manner to two-dimensional video. The presentations can be non-intuitive, and it can be difficult for a user to grasp the real three-dimensional nature of the captured images.

### Summary

Various embodiments of the invention include a method, an apparatus and a computer program, which are characterized by what is stated in the independent claims. Various embodiments of the invention are disclosed in the dependent claims.

According to a first aspect, this specification describes a method comprising: providing one or more virtual views within a three-dimensional virtual reality environment, said one or more virtual views representative of a virtual reality scene, and said one or more virtual views having a first projection type; selecting, within the three-dimensional virtual environment, one of said virtual views; causing the selected virtual view to change from the first projection type to a second projection type in response to a first trigger; and enabling manipulation of the selected virtual view in the second projection type.

The first trigger may comprise at least one of: a first user input; selection of said virtual view; selection of an editing tool; and/or satisfaction of one or more conditions by the virtual view.

Manipulating the selected virtual view may comprise editing the virtual reality scene represented by the virtual view.

The first trigger may comprise a user input, and wherein the user input comprises one or more of: a user gesture; a voice command; a keyboard and/or mouse input; and/or peripheral controller input.

The first projection type and/or second projection type may comprise a projection of the virtual reality scene onto: a surface of a sphere; a surface of a cylinder; a surface of a regular or irregular polyhedron; a surface of a cone; a surface of a regular or irregular three dimensional solid; a three dimensional solid comprising flat and/or curved surfaces; or a two-dimensional plane.

The method may further comprise: receiving a second user input; and changing the selected virtual view projection from the second projection type to a third projection type in response to the second user input.

The method may further comprise reverting the selected virtual view to the first projection type subsequent to manipulating the selected virtual view.

The one or more virtual views may comprise a plurality of virtual views.

According to a second aspect, this specification discloses apparatus comprising means for displaying a three dimensional virtual reality environment configured to: provide one or more three-dimensional virtual views within the three-dimensional virtual reality environment, said one or more virtual views representative of a virtual reality scene, and said one or more virtual views having a first projection type; receive a selection, within the three-dimensional virtual environment, of one of said virtual views; cause the selected virtual view to change from the first projection type to a second projection type in response to a first trigger; and perform manipulation the selected virtual view in the second projection type.

The apparatus may further comprise a motion sensor configured to receive one or more user inputs and wherein the first trigger comprises a first user input.

The motion sensor may be configured to detect a user gesture comprising: a cut; a pinch; a stretch; a squeeze; a twist; and/or a swipe.

The first projection type and/or second projection may comprise a projection of the virtual reality scene onto: a surface of: a sphere; a surface of a cylinder; a surface of a polyhedron; or a surface of a cone; or a two-dimensional plane.

The apparatus may be further configured to: receive a further trigger; and change the selected virtual view projection from the second projection type to a third projection type in response to the further trigger.

According to a third aspect, this specification describes a system comprising: a virtual reality display device; and a virtual reality content source comprising one or more virtual views of one or more virtual reality scenes, wherein the system is configured to perform any of the methods described herein.

According to a fourth aspect, this specification provides an apparatus configured to perform a method as described with reference to the first aspect.

According to a fifth aspect, this specification describes computer readable instructions which, when executed by computing apparatus, cause the apparatus to perform any of the methods described herein.

According to a sixth aspect, this specification describes an apparatus comprising one or more processors and a memory containing instructions that, when executed by the one or more processors, cause the apparatus to perform the steps of: providing one or more virtual views within a three-dimensional virtual reality environment, said one or more virtual views representative of a virtual reality scene, and said one or more virtual views having a first projection type; selecting, within the three-dimensional virtual environment, one of said virtual views; causing the selected virtual view to change from the first projection type to a second projection type in response to a first trigger; and enabling manipulation of the selected virtual view in the second projection type.

According to a seventh aspect, this specification describes a non-transitory computer readable medium having computer readable code stored thereon, the computer readable code, when executed by at least one processor, causing performance of the steps of: providing one or more virtual views within a three-dimensional virtual reality environment, said one or more virtual views representative of a virtual reality scene, and said one or more virtual views having a first projection type; selecting, within the three-dimensional virtual environment, one of said virtual views; causing the selected virtual view to change from the first projection type to a second projection type in response to a first trigger; and enabling manipulation of the selected virtual view in the second projection type.

### Brief description of the drawings

For a more complete understanding of the methods, apparatuses and computer-readable instructions described herein, reference is now made to the following description taken in connection with the accompanying drawings in which:
Figure 1 is a schematic illustration of a virtual reality display system which may be utilised during performance of various methods described herein with reference to Figures 2 to 7;
Figure 2 shows an example of a three-dimensional virtual environment for manipulating virtual views of virtual reality content;
Figure 3 shows an example of a user interacting with the virtual environment to change a projection type;
Figure 4 shows a further example of a user interacting with the virtual environment to change a projection;
Figure 5 an example of a user interacting with the virtual environment using multiple gestures to change a projection type;
Figure 6 shows examples of potential projection change paths;
Figure 7 shows a flow diagram of an exemplary method for changing the projection of a virtual view within a virtual environment; and
Figures 8A and 8B are schematic illustrations of example configurations of a virtual reality display device and a content server respectively;

### Detailed description

In the description and drawings, like reference numerals may refer to like elements throughout.

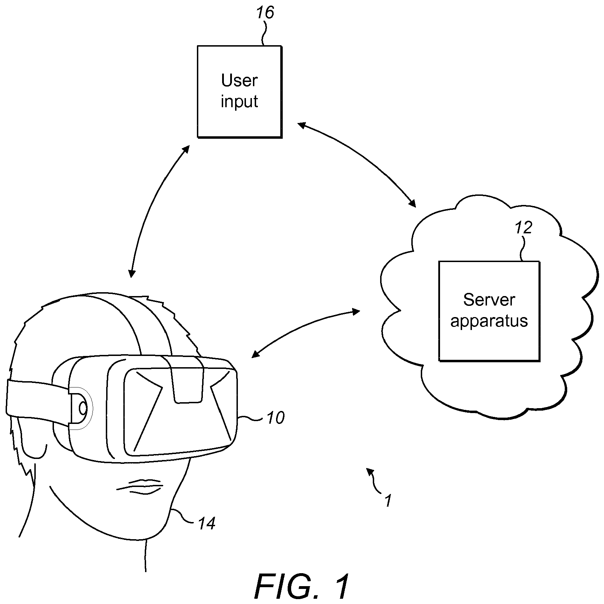

Figure 1 is a schematic illustration of a system 1 for providing virtual reality content for viewing, manipulation and/or editing by a user. As will be appreciated from the below discussion, virtual reality content generally includes both a visual component and an audio component but, in some implementations, may include just a visual component, just an audio component and/or other modalities such as for example haptics, smell, or the like. As used herein, virtual reality content may cover, but is not limited to, at least computer-generated virtual reality content, content captured by a presence capture device which can capture panoramic images and video, such as Nokia's OZO camera or the Ricoh's Theta for example, and a combination of computer-generated and presence-device captured content. Indeed, virtual reality content may cover any type or combination of types of immersive media (or multimedia) content. The term virtual reality as used herein may additionally be used to connote augmented reality and/or mixed reality.

Virtual reality can be defined as an environment in which a viewer is immersed in and/or surrounded by a representation of captured real-world content, for example captured by virtual reality cameras, purely synthetic content or a hybrid of both real world and synthetic content. Augmented reality can be defined as an overlay (usually computer generated, such as texts, arrows and/or figures for example) of content onto a real world view. For example, a user may be presented with virtual objects embedded into a real world view. Mixed reality can be defined as a real world view with an overlay of synthetic content onto the real world view. One definition of Mixed Reality is that the overlay of synthetic content onto the real world content is of high enough visual quality and sufficiently anchored to the real world view that the embedded objects (for example figures representing people) look so natural that a user cannot easily distinguish what in the view is real and what is synthesized.

The virtual reality system 1 includes a virtual reality display device 10, for displaying visual data in a virtual reality space, and a virtual reality content server 12 for supplying visual data to the virtual reality display device 10. The virtual reality display device 10 can be in the form of a head mounted display wearable by a user 14. The virtual reality display device 10 may be a device, like a head-mounted display, where offset images are displayed separately to the left and right eye of the viewer thus creating a perception of three-dimensional depth and stereoscopic view. In some embodiments, it may further comprise an input device 16, such as a motion sensor, microphone, computer mouse, keyboard and/or joypad for example. The system can receive user inputs via the input device 16.

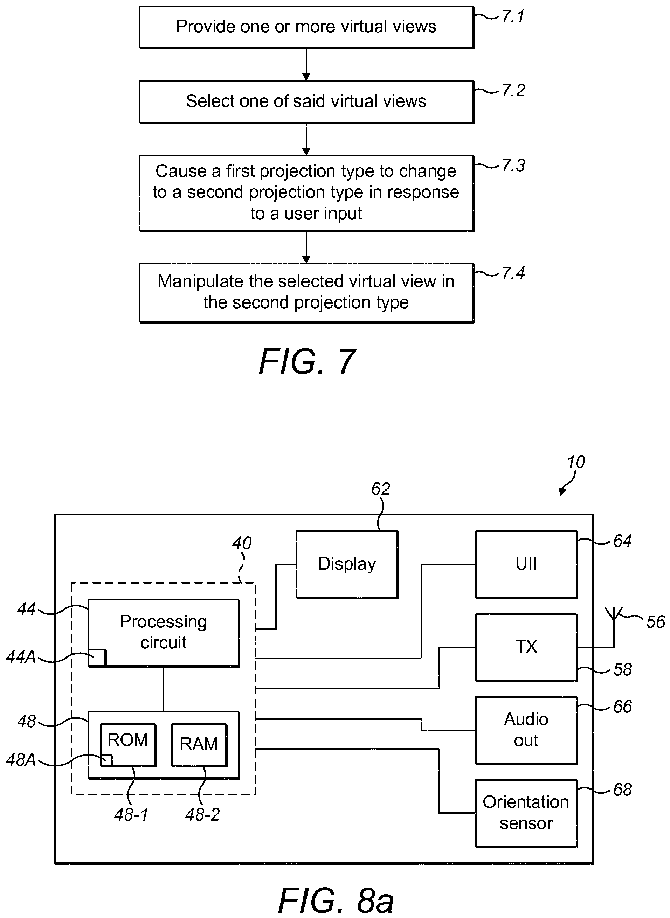

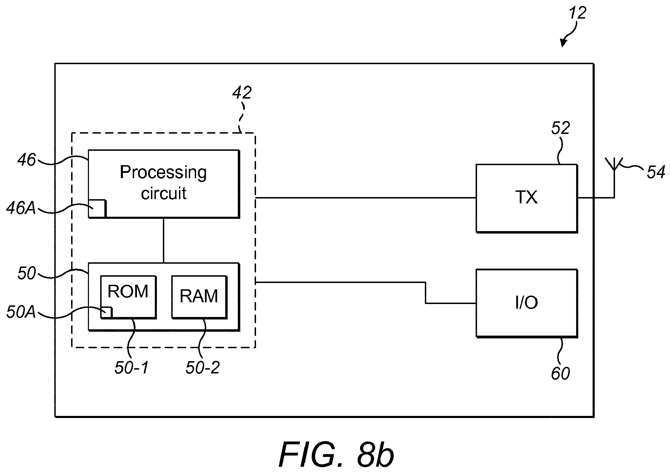

Details of the components and features of the virtual reality display device and content server are described below in more detail with reference to figures 8A and 8B.

Virtual reality content is provided to the user via the virtual reality display device 10, for example by being streamed from a virtual reality content server and displayed on a display in the virtual reality display device 10. If a user is viewing virtual reality content from a perspective within that virtual reality content, for example immersed in a head mounted display environment, the user is restricted to only seeing one three-dimensional scene at a time. Furthermore, the user may be restricted to only seeing a part of the three-dimensional scene. However, in an editing or post-production phase of a virtual reality production (such as a movie or television series for example), it is necessary to handle several three-dimensional scenes in parallel and /or simultaneously. For example, a user editing the virtual reality content may desire to compare the content, merge content, modify the audio-visual characteristics of the content, or trim the time synchronisation, for example.

The system 1 can be used to edit virtual reality content within a virtual reality environment. Virtual reality content can be supplied to the virtual reality headset 10 from the content server 12. The virtual reality content can be supplied as one or more virtual views within the user's virtual reality viewing and editing environment. The virtual views are provided as a projection of the three-dimensional scene to which they relate onto the surface, for example the surface of a three-dimensional object or a two-dimensional plane. A user of the virtual reality headset can interact with the virtual reality content displayed to the user in the three-dimensional virtual reality environment to manipulate the virtual views, for example to edit the virtual reality content. The user can simultaneously view and handle several video clips or views within the user's virtual reality environment.

A virtual scene can be defined as virtual reality content in the form that it appears when a user is immersed in the virtual reality content (i.e. the virtual content as it would appear from a perspective within that virtual reality content). By contrast, a virtual view can be defined as a representation of the virtual scene within a virtual editing/manipulation environment, for example as a projection of the virtual scene onto a three dimensional shape.

During editing of the virtual reality content, the user may wish to change the projection type of the virtual view from an initial projection type to a second (or even further) projection type in order to better edit or view a particular piece of the virtual reality content.

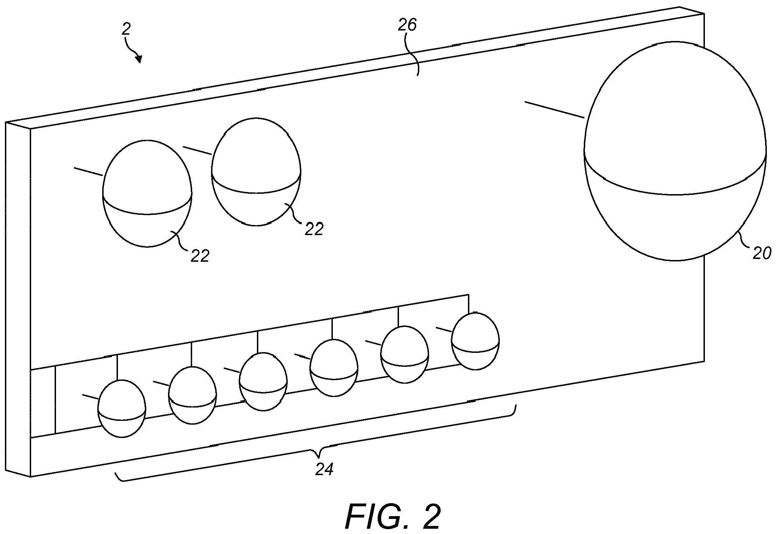

Figure 2 shows an example of a three-dimensional virtual environment for manipulating virtual views of virtual reality content.

The three dimensional virtual environment 2 (also referred to herein as virtual reality space) is displayed to a user through a virtual reality headset 10. The three-dimensional virtual environment comprises one or more virtual views of one or more virtual reality scenes. A virtual view comprises an overview virtual representation of a virtual reality scene or image within the virtual reality environment. The virtual view can be represented as an object in the virtual environment with which a user can interact. The object includes on its surface visual information of the virtual reality or panoramic view to which it relates. The virtual view presented to the user, as used herein, is not immersion, but instead gives an "outside view" of the virtual reality content. The user can select one or more of the virtual views to interact with and manipulate within the virtual environment 2.

Three dimensional images, such as panoramic 360-images, of the one or more virtual reality scenes are projected onto three-dimensional surfaces to create virtual views. In the example shown in Figure 2, the three-dimensional surfaces are spherical surfaces, though many other examples are possible, as described below. A plurality of virtual views can be presented to the user in the virtual environment.

In some embodiments, one or more of the virtual views is from one of a plurality of cameras (such as three-sixty degree and/or 720 degree cameras) capturing a scene. A virtual view may correspond to one or more of: a single virtual image, such as a panoramic three-sixty photograph; a particular one of the plurality of three-dimensional cameras capturing a scene; one time incident (e.g. one frame, the frame rate can be for example thirty frames per second) of the captured three-dimensional scene feed; or a frame of a video clip with many frames, such as the first frame. In some embodiments, the virtual view may be a video feed of the associated virtual reality content, for example playing at a selected frame rate, such as thirty frames per second.

In embodiments where the virtual view is initially provided as a sphere, the sphere and locations on the sphere surface can be specified by a three-dimensional spherical orientation (defined for example by radius r, polar angle *θ* and azimuthal angle *ϕ* in a common coordinate system with a reference zenith or vertical direction). The orientation can be based on the content of the three-dimensional scene on the surface of the sphere. For example, in a virtual view containing a dog, the virtual view could be orientated such that the legs of the dog are pointing downwards.

In some embodiments, a user selected virtual view can be displayed as a "master view" 20. The master view 20 can be displayed as the largest of a plurality of virtual views 20, 22, 24 displayed in the three dimensional virtual environment 2. For example, a number of virtual views 22, 24 can be provided in the virtual environment, and a user selection of one of these views can result in the selected view being displayed as the master view 20, which is larger than the original version of the selected view. The master view 20 can be used as a large size, high resolution monitor to view the content of the smaller size virtual views in 22 and 24. The user can interact with features in the master view 20 in order to manipulate content in the virtual view associated with the master view 20.

In some embodiments, the virtual views displayed in the virtual environment 2 comprise one or more "key views" 22. Key views 22 can represent video sequences that have been brought from an outside source (e.g. live camera feed, video sequence storage) into the editor for manipulation. The key views 22 can represent a plurality of virtual views as a single selectable object in the three-dimensional virtual environment 2. For example, a key view 22 may comprise a representative frame in a sequence of virtual views that make up a recorded three-dimensional video clip, such as the first frame of the video clip for example.

In further examples, a key view 22 may be associated with a three-dimensional scene capture device operating in a particular location within a three-dimensional scene. In these examples, some of the key views 22 may represent a different view of the scene taken from a different scene capture device in a multi-device environment. Examples can include live multi-camera production with omnidirectional three-sixty-cameras.

Key views 22 can also represent a video sequence of computer generated three-sixty-content or virtual reality content. A key view can also represent a still three-sixty -image.

In some embodiments, the user can interact with the key views 22 in order to manipulate content in the virtual views associated with the keys view 22. Manipulation of the virtual views may include, for example, editing, zooming, cropping or otherwise modifying the virtual view(s).

Selection by the user of a key view 22 may display one or more further virtual views 24 of a scene associated with the selected key view 22 in a panel in the virtual environment 2. The further virtual views 24 can, in some embodiments represent a plurality of frames of a three-dimensional video. The views 24 may be frames that correspond to a video sequence that is represented by a key view 22. Alternatively or additionally, the further views 24 may be frames that correspond to multiple video sequences that represent multiple key views 22. The frames of virtual video may be arranged in chronological order for example along a timeline. Other examples of arranging the virtual views include arranging the views based on one or more of: the location where the views have been captured; the file size of the virtual video associated with the virtual view; the length of the virtual video associated with the virtual view; the identity of a user who captured the virtual view; and/or the visual content of the virtual video associated with the virtual view.

The further virtual views 24 can, in some embodiments, represent virtual views from different viewpoints. Using the further virtual views 24, the user can, in some embodiments, perform one or more of the following actions: reorder the further virtual views 24 along a timeline, add further virtual views 24, remove further virtual views 24, multiply further virtual views 24, or perform visual and/or audio modifications and/or manipulations to the further virtual views 24. For example, the user can "drag-and-drop" further virtual views 24 to reorder them along a timeline. In some examples, the user can drag-and-drop a further virtual view 24 to a "dustbin" region of the virtual environment to delete the further virtual view 24.

The master view 20, the key views 22 and the further virtual views 24 are positioned in front of an editor panel 26 in the three-dimensional virtual environment 2. The arrangement of the virtual views in front of the editor panel 26 shown in Figure 2 is exemplary, and many other alternatives are possible. The editor panel 26 comprises one or more editing tools with which a user can edit selected virtual views. The editor panel can be in the form of a planar display or a curved display, and/or the editor may consist of separate elements that apparently "float" in front of the user in the virtual reality environment. The editor panel may, for example, also be provided in the form of a toolbar.

One or more of the virtual views 20, 22 and 24 can present a still image representing a frame. In some embodiments, a play-function of the editor can be applied to a virtual view, which results in the virtual view starting to show corresponding video; that is, frame by frame, with a given frame rate.

The virtual views comprise one or more projections of three-dimensional images onto the surface of a three-dimensional or two-dimensional object. The type of projection of the three-dimensional images onto the object is herein referred to as the projection type. In the example shown in Figure 2, the virtual views comprise images projected onto the surface of a three-dimensional sphere, so the virtual views could be said to be in a spherical projection type. The projection type of the virtual views can be any of: a surface of a sphere; a surface of a cylinder; a surface of a polyhedron; a surface of a cone; a surface of another three-dimensional solid and/or a two dimensional plane embedded in the three-dimensional virtual space. The polyhedral may comprise an irregular or regular form polyhedron with n faces. The three-dimensional solid may be of regular or irregular form, consisting of flat or round/curved surface elements. Two-dimensional projection types comprise projections of the surfaces of three-dimensional objects onto a planar surface. Examples of such projections include, but are not limited to: conical projections, for example a Lambert projection; cylindrical projections, for example a Mercator projection; azimuthal projections, such as stereographic projections; and/or polyhedral projections, such as butterfly projections.

Each projection type may have sub-projection categories relating to the details of how the three-dimensional image is projected onto that projection type. For example, the sub-projection types may each relate to different mathematical parameters used to determine the projection.

In examples where the virtual reality content comprises three-hundred and sixty degree views, such as a three degrees of freedom volume (i.e. virtual content comprising roll, pitch and yaw degrees of freedom), the three-hundred and sixty degree views are projected onto the surface of the three-dimensional or two-dimensional objects. A three degrees of freedom volume can be defined as a virtual volume in which a user can rotate the view of a virtual scene about three perpendicular axes.

In examples where the virtual reality content comprises a full three-dimensional scene, such as a six degrees of freedom (i.e. virtual content comprising x, y, z, roll, pitch and yaw and/or surge, heave, sway, roll, pitch and yaw degrees of freedom) volume, a two-dimensional "shell" of the scene may be projected onto the surface of the three-dimensional shape to represent the scene. The shell may comprise a three degrees-of-freedom (i.e. roll, pitch and yaw) virtual view taken from a point in the six degrees-of-freedom volume. For example, if the initial projection type is a sphere, a spherical shell around a point in the three-dimensional scene can be projected onto the sphere. The user can, in some embodiments, change the spatial location of view within the six degrees-of-freedom volume, resulting in the virtual view changing to a three degrees-of-freedom virtual view taken from the new spatial location. A six degrees of freedom volume can be defined as a virtual volume in which a user can both translate a view of virtual scene along three perpendicular axes and rotate the view of the virtual scene about three perpendicular axes.

The system 1 can receive a user input via the input device to interact with the virtual views displayed in the three-dimensional virtual environment 2. An example of a user input is a user gesture in the virtual reality space. In embodiments where the input device comprises a motion sensor, the user can perform one or more gestures that are recognised by the system. The system uses the recognised gestures to initiate actions within the virtual environment 2.

Other examples of user inputs, as an alternative or in addition to gestures, include any combination of: voice recognition; keyboard input; mouse input; peripheral controller input; data gloves; joysticks; gaze tracking; and/or other hand orientation, movement and/or pressure sensing input devices. Further examples not described here can also be used.

In some embodiments, the master view 20 displays the output of the editing process. The user interacts with the virtual reality content through any of the master view 20, key views 22 or further virtual views 24 in order to edit the virtual reality content.

An example of the user editing the virtual reality content is to create a sequence of frames and/or clips for a virtual reality or 3D video. The user can choose any of the virtual views (i.e. the master view 20, key views 22, or further virtual views 24) and place them along a timeline in any order. This creates a sequence of frames and clips which together form a combined master video clip. A further example is stitching together virtual views of a scene from different three-dimensional capture devices.

The user may change the orientation of any of the virtual views in the timeline. This creates viewing orientation changes which the user can experience when viewing in the combined master video clip.

Further examples of editing the virtual reality content include: multi-camera alignment; colour correction; audio source positioning; adding text; inserting additional images, such as CGI; adding text; adding visual effects; and/or setting a landing view for a three-dimensional scene.

During the editing process a user can interact with virtual views to change their projection from a first projection type to a second projection type. This can facilitate more convenient editing of the virtual views. In some embodiments, further user inputs can be provided to change the second projection to a third projection, and so on. The user can also return to the first projection. In general, the projection type of the second and subsequent projection types can be any of the projection types described above in relation to the first/initial projection type.

In some embodiments, the second projection type belongs to a different topological class to the first projection type. Transformations between projection types may be conformal, that is, the transformation preserves angles locally. In other words, conformal maps preserve the angles and the shapes of infinitesimally small figures, but not always the size or curvature of those figures.

In some embodiments, changes in projection types can occur immediately, for example there being a discontinuous jump in the projection. From the perspective of the user, the projection type change may appear instantaneous. Alternatively, in some embodiments the projection types can change gradually. For example, the user could be given the impression that the projection type is changing smoothly. A frame-by-frame animation technique can, in some embodiments, be used to achieve this. The rate of change of the projection type from one type to another is, in some embodiments, dependent on the user input. For example, the rate of change can be dependent on the speed the user performs an action, such as a gesture.

When the editing user handles the editor user interface with the initial projections, the virtual environment 2 provides an environment in which the user can easily view all the content that is on the virtual views. For example, sometimes the user may wish to see the whole sphere surface of a virtual view with all the content at one glance. For example, the user may change the image from a sphere to, for example, an image on a two-dimensional plane - and then back to a sphere. The editing user may, for example, have the views 22, 24 in one projection, like spheres, and simultaneously study the master view 20 by changing the projections of the master view 20 from one projection to another, for example from a sphere to cylinder and so on.

While the system, apparatus and method are described herein with reference to an editing environment, the system, apparatus and method can also be applied to a capture phase in a three-dimensional multi-camera production. The user, for example a film director, can wear a head-mounted display and sees, in virtual reality, virtual views as described herein, which can represent, for example, one camera on recording a scene. The user can, during capture of the virtual reality content/scene, change the virtual views from one projection type to another.

The method can also be applied to viewing video content in a virtual reality environment. The viewer can wear a head-mounted display and see 360-degree video content in the form of, for example, one or more spheres and can change the projection to some other 3D or 2D projection on corresponding 3D or 2D object/solid/form.

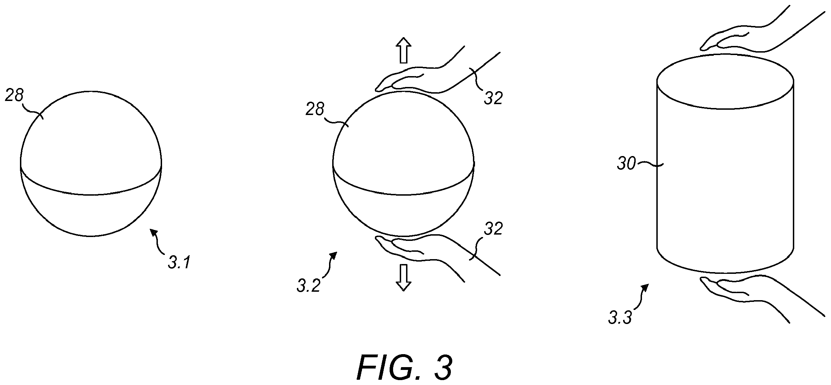

An example of a user interacting with the virtual environment to change a projection type is shown in Figure 3.

In the example of Figure 3, at operation 3.1 a virtual view is provided in the three-dimensional virtual environment 2 in a first projection type 28, which in this example is a projection of the virtual view onto a sphere. A user can supply user inputs to manipulate the view. For example, the user can rotate the virtual view to view it from a different angle, which can be useful, for example, in order to view a portion of the display not previously visible. The user can interact with virtual views in the virtual environment 2 via a motion sensor that captures user gestures and translates the user gestures into actions within the virtual environment 2.

At operation 3.2 a user input is used to initiate a change in the projection type from the first projection type 28 to a second projection type 30. The user input is in the form of a predefined gesture 32 captured by a motion sensor. In this example, the gesture is made by "touching" (i.e. contacting the user's hands with the virtual view within the virtual environment) the sphere at its poles in virtual reality space and dragging the upper and lower hemispheres of the sphere apart.

In general, other types of trigger can be used to initiate the change in projection type. As well as a user input, other examples of a trigger that can be used to initiate the change in projection type include: selection of said virtual view; selection of an editing tool; and/or satisfaction of one or more conditions by the virtual view. The trigger for changing the projection type can, in some embodiments, be applied automatically, as described below.

At operation 3.3 the virtual view is changed from the first projection type 28 to the second projection type 30. In this example, the second projection is in the form of a cylinder. The user can then manipulate the virtual view in the second projection type 30, for example to edit the content of the virtual view. The second (or subsequent) projection type can provide a more user friendly view of the virtual view for performing some types of manipulation of a virtual scene. For example, a two-dimensional projection can allow a user to view a complete three-dimensional scene at once to ensure consistency of a visual effect throughout the scene.

The process of the transition from the first projection type 28 to the second projection type 30 as shown in Figure 3 may be implemented as follows.
1. The user selects the view (e.g. a specific sphere, such as the first projection type 28 shown in Figure 3) in a user interface.
2. The user selects location(s) or point(s) of the object representing the view (e.g. virtually touches the poles of the sphere).
3. The selection of the location(s) or point(s) indicated above determines a transition start time incident (t₁) and the selection determines one or more starting locations on the view object (e.g. the spherical coordinates of the points that the user has virtually touched).
4. The user starts to perform predefined virtual gestures to the view (e.g. drags the poles apart which is known to make the sphere into a cylinder).
5. The system recognizes that a sphere to cylinder transition has been indicated, and knows that the full transition would correspond to a predetermined length of movement of the hands (e.g. the hands need to move to x centimetres apart when the full transition is reached).
6. The system follows and tracks the user's gesture or movement and creates accordingly interpolated images of the sphere to cylinder transition, for example one image is created for each x/n centimetres of movement.
7. When the movement of the user's hands has reached the predefined limit, the view has been changed to cylinder.
8. The transformation is complete at time t₂.

When the user interface shows the transition phase images the user may see the sphere changing into cylinder through a smooth transformation as in an animation. The instantaneous speed of the transformation may depend on the instantaneous speed of the user's gesture. For example, the user may start the transition with a slow moving gesture and the corresponding transformation is taking place slowly and in the latter part of the transition, the user may change the speed of the movement to faster and the transformation speed changes accordingly.

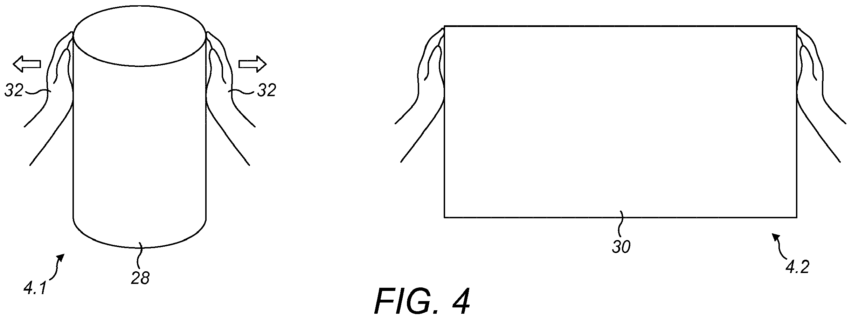

A further example of a user interacting with the virtual environment to change a projection is shown in Figure 4. In this example, the first projection type 28 of the virtual view is a cylindrical projection. At operation 4.1 the user interacts with the virtual view using a predefined gesture 32. In this example, the user touches opposing sides of the cylinder in virtual reality space. The user then drags the opposing sides of the cylinder apart to initiate a change in the projection type from the first projection type 28 to a second projection type 30.

At operation 4.2 the projection type is changed to the second projection type 30. In this example, the second projection type is a two-dimensional rectangular projection. The user can then manipulate the virtual view in the second projection type 30, for example to edit the content of the virtual view.

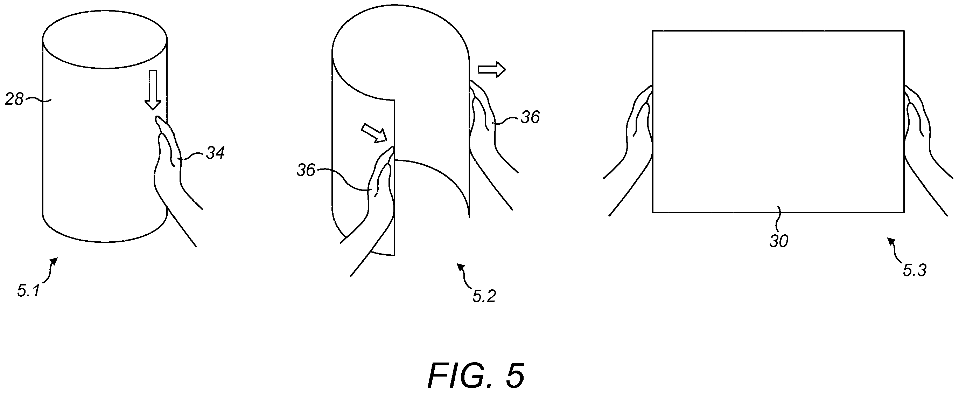

An example of a user interacting with the virtual environment using multiple gestures to change a projection type is shown in Figure 5. In this example, the first projection type 28 is a cylindrical projection. The user can use multiple user inputs to control the change in projection type from the first projection type 28 to the second projection type 30. This can provide finer control of the parameters and/or properties of the second projection type. In this example, a user is transforming a virtual view from a cylindrical projection to a two-dimensional rectangular projection.

At operation 5.1, the user interacts with the virtual view in the first projection type 28 with a first user interaction 34. In this example, the user performs a "cut" gesture along the curved face of the cylinder in virtual reality space. The first user interaction 34 is used to define one or more properties of a transformation of the virtual view into the second projection type. Examples of such properties include: fixed points of the transformation; orientations of a projection; defining particular points and/or lines that in the first projection that will map to particular points or lines in the second projection; and/or other parameters of the transformation. In this example, the first user interaction 34 is used to define which parts of the cylindrical projection will be mapped to edges of the rectangular projection.

At operation 5.2, the user performs a second user interaction 36 within the virtual environment. The second user interaction 36 initiates the transformation of the first projection type 28 to the second projection type 30 based on properties defined by the first user interaction 34. In this example, the second user interaction 36 is an "unrolling" gesture used to unroll the cylindrical projection into a rectangular projection.

At operation 5.3, the projection type is changed to the second projection type 30. In this example, the second projection type is a two-dimensional rectangular projection. The user can then manipulate the virtual view in the second projection type 30. One side of the two-dimensional rectangular plate may show the outer surface image of the cylinder 34. The other side of the plate may show the corresponding mirror image.

While figure 5 has been described with reference to a first user interaction 34 and a second user interaction 36, in some embodiments further user interactions can be performed between the first and "second" user interaction to define additional properties of the projection transformation. For example, multiple "cuts" could be made to a three-dimensional projection in order to define how edges of its cut surface are mapped to edges of a two-dimensional projection. Other examples include defining fixed points of a projection transformation, defining the relative orientation of the first and second projection types. Furthermore, from any projection (e.g. sphere, cylinder etc.) one could cut and select an area or any form on the surface of the view object and transform only this area selection into a new projection for a closer look.

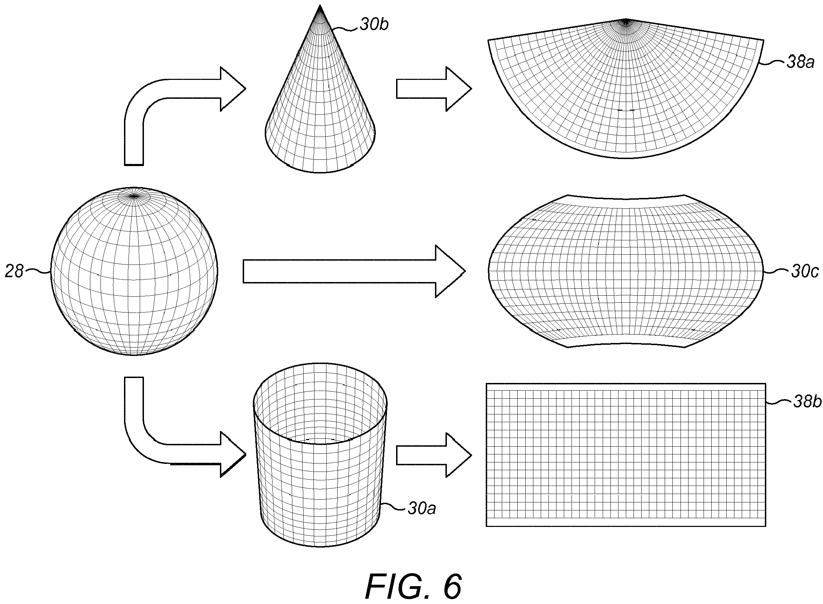

Examples of potential projection change paths are illustrated in Figure 6.

In this example, the first projection type 28 is a sphere, though the first projection type 28 can be any type. Depending on a user input, the projection type can be changed from the first projection type 28 to a second projection type 30. Further user inputs can be used to transform the second projection type to a third projection type 38. For example, stretching the poles of a spherical projection apart, as described in relation to Figure 3, can result in the second projection type being a cylindrical projection 30a, or can result in the second projection type being a distortion of the spherical projection, for example to an oblate spheroid. In another example, a user gesture holding one pole of the spherical projection in place within the virtual reality space and pulling the base away from it results in the second projection type being a conical projection 30b. A "cut and peel" series of user gestures, such as that described in relation to Figure 5, can be used to transform three-dimensional projection types 28, 30a, 30b into two dimensional projections types 30c, 38a, 38b.

It should be noted that the projections of the spherical projection content into any other projection distorts the image. The other projections (like in maps) have their definitions and the outcomes are for example like those in Figure 6. The distortion mean that in the figure, some distances appear to be longer/shorter than they are. For example, in Mercator projection maps, countries and regions near the Arctic Circle look larger, compared with other, more southern countries and regions, than they actually are.

The projection views on the 3D and 2D surfaces may include an overlay of grids, lines or other visual form which indicate the projection geometry and change accordingly when the projection changes from one to another.

The transition may be accompanied with a sound that starts when the visual transition starts and ends when the visual transition ends.

In some embodiments, the transitions may be activated/triggered by a user. In other embodiments, the transitions may be activated/triggered automatically, that is, if certain conditions exist, the system starts the transition. For example, the user may set the system in the "auto-projection" mode, where the system, in the course of the user's viewing and editing work, always selects (or proposes) the most suitable projection. The selection can be based on algorithms that take into account the visual content of the virtual view (pattern recognition) and the orientation of the objects etc. in the view, and may be based on the earlier viewing/editing practices of the user (when the user has used the projections by manually selecting them). The algorithm may, for example, change from spherical projection into a 2D projection if the three-sixty degree virtual view is observed to have elements, objects, and figures of interest, perhaps all moving, in the whole three-sixty degree viewing. In the spherical projection, part of the elements would be invisible on the backside of the sphere whereas the 2D view would show all the elements. On the other hand, if the present view is 2D and there are elements of interest only in one location on the view, for example two people having a discussion, the system can change the projection into a sphere and have the elements of interest on the front side of the sphere, facing the editing viewer. Also in the automatic projection change, the change can happen through image animation.

Figure 7 shows a flow diagram of an exemplary method for changing the projection of a virtual view within a virtual environment.

At operation 7.1, one or more three-dimensional virtual views within a three dimensional virtual environment are provided, said one or more virtual views representative of a virtual reality scene, and said one or more virtual views having a first projection type. The virtual views can, for example, be provided in a virtual environment as described in relation to Figure 1.

At operation 7.2, a user selects one of the virtual views within the three-dimensional environment. Selection of a virtual view can be achieved by means of a user input. The user input is received through a user input device, for example: a motion capture device; a microphone; a peripheral device; a keyboard; data gloves; one or more joysticks; and/or a mouse. For example, a user gesture can be captured by a motion capture device. User gestures, such as pointing to a virtual view or "pinching" a virtual view can be used to select and move a virtual view within the virtual environment.

At operation 7.3, a user input is received. In response to the user input, the selected virtual view is changed from the first projection type to a second projection type. The user input can be in any of the forms described above with respect to Figures 2 to 6. In embodiments where a user gesture defines a user input, the user gesture can comprise any of: a cut; a pinch; a stretch; a peeling motion; an unrolling motion; a swipe; a twist; and/or a squeeze. The speed and/or orientation at which the user performs the gesture, in some embodiments, determines properties of the transformation from the first to the second projection type.

At operation 7.4, the user manipulates the selected virtual view in the second projection type. Further user inputs can be used to manipulate the selected virtual view. The further user inputs can be in any of the forms described above in relation to changing the projection type.

Manipulation of the selected virtual view can comprise editing the virtual view in the second projection. As described further above, examples of manipulating the virtual view in the second projection include: editing the virtual view; zooming into or out of the virtual view; cropping the virtual view; recolouring the virtual view; rotating the virtual view; inserting objects into the virtual view; and/or merging two or more virtual views. Other manipulations not discussed here can also be used.

In some embodiments, the user can transform the projection type of the virtual view from the second projection type to a third projection type (and potentially further projection types). Additional user inputs can be used to transform each of the virtual views into another one, or back again.

There are benefits and limitations in using the various projections in viewing and/or editing of virtual reality content and therefore there are advantages if one can easily change the viewing from one projection to another, depending on the needs of the viewer or editor. For example, spherical projection is useful in showing orientations of the objects (such as figures) on the scene. One can see the directions of the objects, figures relative to each other and relative to the sphere centre (e.g. the relevant camera). A limitation of a spherical projection is that one sees only at maximum half of the view (i.e. the hemisphere facing the user). One can rotate the sphere to see the other half of the view, but cannot view the whole 360-degrees at one glance. A cylinder view emphasizes the content and action that happens in a horizontal direction (as is often the case). Also here, one can see the orientation of the objects, setup etc. on the scene and the relative direction of them; however, one does not see the backside of the cylinder, unless the cylinder is being rolled. A planar 2D projection can show the whole 360-degree content on one view, at one glance, but grasping the directions of the objects, figures in the scene, or grasping the whole three-dimensional setup in the image capture location can be un-intuitive and difficult.

Some further details of components and features of the above-described apparatuses 10, 12 and alternatives for them will now be described, primarily with reference to Figures 8A and 8B.

The controllers 40, 42 of each of the apparatuses 10, 12 comprise processing circuitry 44, 46 communicatively coupled with memory 48, 50. The memory 48, 50 has computer readable instructions 48A, 50A stored thereon, which when executed by the processing circuitry 40, 42 causes the processing circuitry 44, 46 to cause performance of various ones of the operations described with reference to Figures 2 to 7. For example, the various modules of Figures 2 to 7 may be implemented as computer readable instructions 48A, 50A stored on memory 48, 50 and being executable by processing circuitry 44, 46. Therefore, the various modules discussed in relation to Figures 2 to 7 may be also referred to as "circuitry". The controllers 40, 42 may in some instances be referred to, in general terms, as "apparatus".

The processing circuitry 44, 46 of any of the user equipment/apparatuses 10, 12 described with reference to Figures 1 to 7 may be of any suitable composition and may include one or more processors 44A, 46A of any suitable type or suitable combination of types. For example, the processing circuitry 44, 46 may be a programmable processor that interprets computer program instructions 48A, 50A and processes data. The processing circuitry 44, 46 may include plural programmable processors. Alternatively, the processing circuitry 44, 46 may be, for example, programmable hardware with embedded firmware. The processing circuitry 44, 46 may be termed processing means. The processing circuitry 44, 46 may alternatively or additionally include one or more Application Specific Integrated Circuits (ASICs). In some instances, processing circuitry 44, 46 may be referred to as computing apparatus.

The processing circuitry 44, 46 is coupled to the respective memory (or one or more storage devices) 48, 50 and is operable to read/write data to/from the memory 48, 50. The memory 48, 50 may comprise a single memory unit or a plurality of memory units, upon which the computer readable instructions (or code) 48A, 50A is stored. For example, the memory 48, 50 may comprise both volatile memory 48-2, 50-2 and non-volatile memory 48-1, 50-1. For example, the computer readable instructions 48A, 50A may be stored in the non-volatile memory 48-1, 50-1 and may be executed by the processing circuitry 44, 46 using the volatile memory 48-2, 50-2 for temporary storage of data or data and instructions. Examples of volatile memory include RAM, DRAM, and SDRAM etc. Examples of non-volatile memory include ROM, PROM, EEPROM, flash memory, optical storage, magnetic storage, etc. The memories in general may be referred to as non-transitory computer readable memory media.

The term 'memory', in addition to covering memory comprising both non-volatile memory and volatile memory, may also cover one or more volatile memories only, one or more non-volatile memories only, or one or more volatile memories and one or more non-volatile memories.

The computer readable instructions 48A, 50A may be pre-programmed into the apparatuses 10, 12. Alternatively, the computer readable instructions 48A, 50A may arrive at the apparatus 10, 12 via an electromagnetic carrier signal or may be copied from a physical entity such as a computer program product, a memory device or a record medium such as a CD-ROM or DVD. The computer readable instructions 48A, 50A may provide the logic and routines that enables the UEs/apparatuses 10, 12 to perform the functionality described above. The combination of computer-readable instructions stored on memory (of any of the types described above) may be referred to as a computer program product.

Virtual reality content may be stored in the non-volatile memory 50-1 of the virtual reality content server 12. The virtual reality content may be accessed by the controller 42 of the virtual reality content server 12 and transmitted to the virtual reality display device 10 via a transceiver 52 and antenna 54. The transceiver 52 and antenna 54 may be provided as integrated components of the content server 12. Alternatively, the transceiver 52 and antenna 54 may be provided as a separate component or components that are connected to the virtual reality content server 12.

The virtual reality display device 10 can receive virtual reality content from the virtual reality content server 12 via an antenna 56 and transceiver 58. The transceiver 58 and antenna 56 may be provided as integrated components of the virtual reality display device 10. Alternatively, the transceiver 58 and antenna 56 may be provided as a separate component or components that are connected to the virtual reality display device 10.

Where applicable, wireless communication capability of the apparatuses 10, 12 may be provided by a single integrated circuit. It may alternatively be provided by a set of integrated circuits (i.e. a chipset). The wireless communication capability may alternatively be a hardwired, application-specific integrated circuit (ASIC).

In some embodiments, the virtual reality display device 10 and virtual reality content server 12 can be connected via a wired connection to transfer data between them.

The virtual reality content server 12 may comprise one or more input/output (I/O) modules 60.

The virtual reality display device 10 comprises one or more displays 62 for displaying virtual reality content to a user. The displays 62 may, for example, comprise any of: a light emitting diode (LED) display; a liquid crystal display (LCD); a cathode ray tube (CRT); a liquid crystal on silicon (LCoS) display; or an organic light emitting diode (OLED) display. For stereoscopic viewing, there may be two displays presenting offset images to the left and right eye of the viewer. The display image from the display may be transferred to the viewer's eye via optical elements, like lenses and waveguides.

The virtual reality display device 10 further comprises one or more user input interfaces 64 capable of receiving a user input. The user input interfaces 64 may include: one or more motion sensors and/or motion capture devices; one or more keyboards and/or mice; one or more microphones; and/or one or more peripheral devices. One or more of the user input interfaces 64 may form an integral part of the virtual reality headset 10. Alternatively or additionally, user input interfaces 64 may comprise interfaces to which external user input devices can connect.

The virtual reality display device 10 may further comprise an audio output 66. The audio output 66 can be in the form of a speaker. The audio output 66 may be in the form an interface to an audio device, such a one or more external speakers or sets of headphones.

The virtual reality display device 10 may further comprise one or more orientation sensors 68. The orientation sensors 68 are configured to determine the orientation of the virtual reality headset 10. The orientation of the headset comprises one or more of: a pitch; a roll; and/or a yaw. The orientation of the virtual reality headset 10 can be used to determine the view of a virtual environment 2 provided to the user by the display 62. In some examples, the orientation sensors 68 may comprise: one or more magnetometers; one or more accelerometers; and/or one or more gyroscopes.

As will be appreciated, the apparatuses 10, 12 described herein may include various hardware components which may not have been shown in the Figures. For instance, the virtual reality display device 10 may in some implementations include a portable computing device such as a mobile telephone or a tablet computer and so may contain components commonly included in a device of the specific type. Similarly, the apparatuses 10, 12 may comprise further optional software components which are not described in this specification since they may not have direct interaction to embodiments. Furthermore, features shown in one of Figure 8a or Figure 8b but not the other could also be incorporated into the figure in which those features are not shown.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term 'circuitry' refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

If desired, the different functions discussed herein may be performed in a different order and/or concurrently with each other. Furthermore, if desired, one or more of the above-described functions may be optional or may be combined. Similarly, it will also be appreciated that flow diagram of Figure 7 is an example only and that various operations depicted therein may be omitted, reordered and or combined.

Although various aspects of the invention are set out in the independent claims, other aspects of the invention comprise other combinations of features from the described embodiments and/or the dependent claims with the features of the independent claims, and not solely the combinations explicitly set out in the claims.

## Claims

1. A method comprising:
providing one or more virtual views within a three-dimensional virtual reality environment, said one or more virtual views representative of a virtual reality scene, and said one or more virtual views having a first projection type;
selecting, within the three-dimensional virtual environment, one of said virtual views;
causing the selected virtual view to change from the first projection type to a second projection type in response to a first trigger; and
enabling manipulation of the selected virtual view in the second projection type.

2. The method of claim 1, wherein the first trigger comprises at least one of: a first user input; selection of said virtual view; selection of an editing tool; and/or satisfaction of one or more conditions by the virtual view.

3. The method of claim 1 or 2, wherein manipulating the selected virtual view comprises editing the virtual reality scene represented by the virtual view.

4. The method of any preceding claim, wherein the first trigger comprises a user input, and wherein the user input comprises one or more of: a user gesture; a voice command; a keyboard and/or mouse input; and/or peripheral controller input.

5. The method of any preceding claim, wherein the first projection type or second projection type comprises a projection of the virtual reality scene onto: a surface of a sphere; a surface of a cylinder; a surface of a regular or irregular polyhedron; a surface of a cone; a surface of a regular or irregular three dimensional solid; a three dimensional solid comprising flat and/or curved surfaces; or a two-dimensional plane.

6. The method of any preceding claim, further comprising:
receiving a second user input; and
changing the selected virtual view projection from the second projection type to a third projection type in response to the second user input.

7. The method of any preceding claim, further comprising reverting the selected virtual view to the first projection type subsequent to manipulating the selected virtual view.

8. The method of any preceding claim, wherein the one or more virtual views comprises a plurality of virtual views.

9. Apparatus comprising means for displaying a three dimensional virtual reality environment configured to:
provide one or more three-dimensional virtual views within the three-dimensional virtual reality environment, said one or more virtual views representative of a virtual reality scene, and said one or more virtual views having a first projection type;
receive a selection, within the three-dimensional virtual environment, of one of said virtual views;
cause the selected virtual view to change from the first projection type to a second projection type in response to a first trigger; and
perform manipulation the selected virtual view in the second projection type.

10. The apparatus of claim 9, further comprising a motion sensor configured to receive one or more user inputs and wherein the first trigger comprises a first user input.

11. The apparatus of claim 10, wherein the motion sensor is configured to detect a user gesture comprising: a cut; a pinch; a stretch; a squeeze; a twist; and/or a swipe.

12. The apparatus of any of claims 9 to 11, wherein the first projection type or second projection comprises a projection of the virtual reality scene onto: a surface of: a sphere; a surface of a cylinder; a surface of a polyhedron; or a surface of a cone; or a two-dimensional plane.

13. The apparatus of any of claims 9 to 12, wherein the apparatus is further configured to:
receive a further trigger; and
change the selected virtual view projection from the second projection type to a third projection type in response to the further trigger.

14. A system comprising:
a virtual reality display device; and
a virtual reality content source comprising one or more virtual views of one or more virtual reality scenes,
wherein the system is configured to perform the method of any of claims 1 to 8.

15. Computer readable instructions which, when executed by computing apparatus, cause the apparatus to perform a method according to any of claim 1 to 8.
